# EUROPEAN PATENT APPLICATION

(11) **EP 1 473 136 A1**
(43) Date of publication of application: **03.11.2004**
(21) Application number: 02786062.6
(22) Date of filing: 09.12.2002
(51) Int. Cl.: B29C 47/20

(54) **METHOD AND DEVICE FOR MANUFACTURING BELLOWS TUBE**

(30) Priority: 12.12.2001 JP 2001378306
(71) Applicant: Sanoh Kogyo Kabushiki Kaisha, Koga-shi, Ibaraki-ken 306-0023 (JP)
(72) Inventor: Kimura, Hideki, Koga-shi, Ibaraki 306-0041 (JP)
(74) Representative: Liesegang, Roland, Dr.-Ing.
(86) International application number: PCT/JP2002/012865
(87) International publication number: WO 2003/049919

(57) **Abstract**

A bellows tube manufacturing method and a system for manufacturing bellows tubes enables composing new mold block trains for molding a bellows tube of a new pattern and sending the new mold block trains into a molding zone without requiring any preparatory operation and without stopping the bellows tube manufacturing system, and manufacturing bellows tubes at high productivity. Elemental mold blocks MBa, MBb, MBc and MBd necessary for composing a first mold block train 20 and a second mold block train 22 for forming elemental molds having molding surfaces conforming to the shape of a bellows tube to be manufactured are selected and arranged according to composition data specifying the numbers, types and order of arrangement of the elemental mold blocks MBa, MBb, MBc and MBd to compose the first mold block train 20 and the second mold block train 22, and the mold block trains 20 and 22 are moved into a molding zone 24. A molten resin is extruded into a space between the mold block trains 20 and 22 moving in the molding zone 24 through an extrusion die 25 by an extruder 26. The corresponding elemental mold blocks MB of the mold block trains 20 and 22 are clamped to form the elemental molds having cavities as the mold block trains 20 and 22 move in the same direction, and a negative pressure is produced in the cavities to mold a bellows tube. The elemental mold blocks MB of the mold block trains 20 and 22 returned from the molding zone 24 are sorted according to type.

## Description

### TECHNICAL FIELD

The present invention relates to a method of manufacturing a bellows tube made of a resin for use in fuel supply piping, hydraulic piping and pneumatic piping on an automobile or such, and a bellows tube manufacturing system for carrying out the method.

### BACKGROUND ART

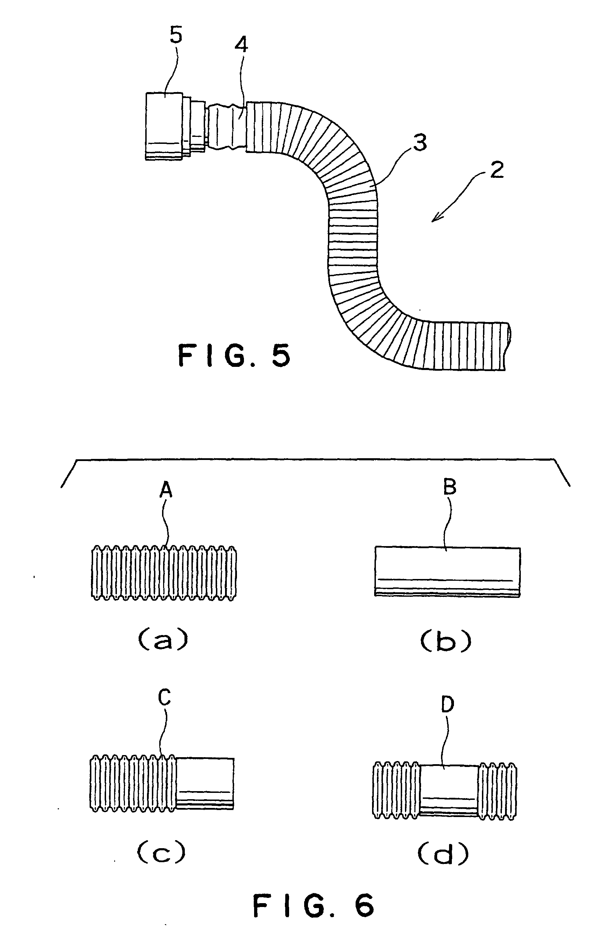

Fig. 5 shows a resin bellows tube 2 made of a resin. Since the resin bellows tube 2 has high strength and high corrosion resistance and is flexible, the resin bellows 2 is used often in a fuel supply piping to be installed in a narrow space in an automotive body. Usually, the bellows tube 2 has a pleated tubular body 3, a straight tubular part 4 to be connected to a union joint, formed integrally with the pleated tubular body 3. The pleated tubular part 3 needs to be held fixedly with a clip or the like when the arrangement of pipes requires. Therefore, some bellows tube is provided with a straight tubular part 4 in its middle part.

Figs. 6 (a) to 6(d) show representative shape elements A, B, C and D for forming a bellows tube 2, respectively. The shape element A is a bellows, the shape element B is a straight pipe, the shape element C is a bellows with a straight pipe at one end thereof, and the shape element D is a straight pipe with bellows at its opposite ends. Bellows tubes of various shapes and different lengths are formed by combining the shape elements A, B, C and D.

A conventional bellows tube 2 is manufactured by extrusion molding that extrudes a resin into elemental molds formed by joining together elemental mold blocks of mold block trains composed by assembling the elemental mold blocks, and having cavities corresponding to those shape elements.

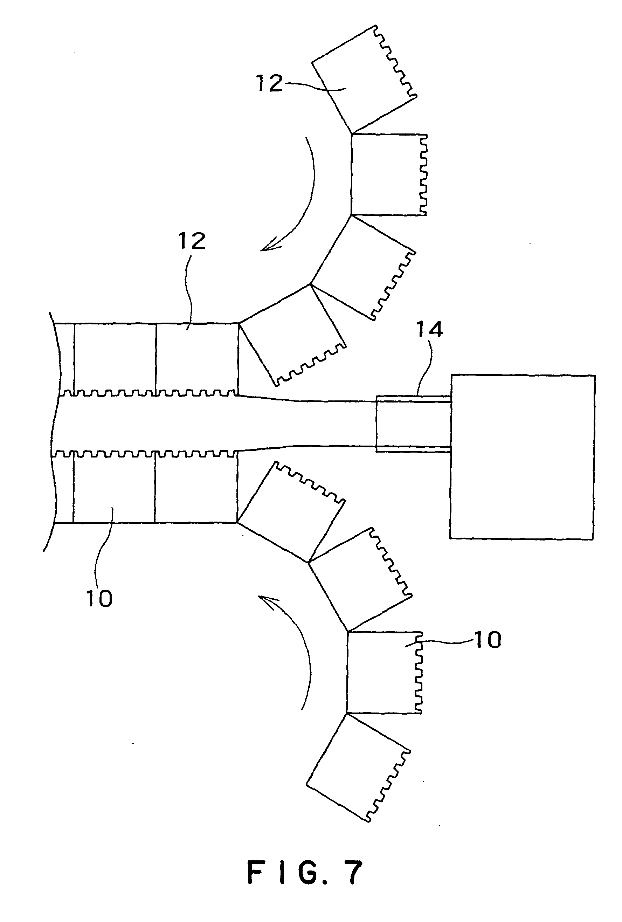

Fig. 7 is a drawing of assistance in explaining a method of manufacturing a bellows tube 2 by an extrusion molding process. A representative prior art related extrusion molding process is disclosed in JP-A 7-520815 (U.S. Pat. No. 5460771).

Referring to Fig. 7, there are shown lower elemental mold blocks 10 and upper elemental mold blocks 12. Each of the lower elemental mold blocks 10 and the upper elemental mold blocks 12 has a substantially semicylindrical molding surface. The lower elemental mold blocks 10 and the upper elemental mold blocks 12 are attached to endless carrying devices, such as endless chains or endless belts. The lower elemental mold blocks 10 and the upper elemental mold blocks 12 are joined and clamped together to form elemental mold, and the elemental mold formed by clamping the lower elemental mold blocks 10 and the upper elemental mold blocks 12 move straight in a molding zone. A molten resin is extruded through an extrusion die 14 by an extruder, not shown. The extrusion die 14 is disposed at the entrance of the molding zone to extrude the resin into a space between the lower elemental mold block 10 and the upper elemental mold block 12 which are about to be joined together.

A cavity defined by the lower elemental mold blocks 10 and the upper elemental mold blocks 12 moving in the molding zone is evacuated at a negative pressure. Consequently, the extruded molten resin comes into close contact with the molding surfaces to form a bellows tube having alternate annular ridges and annular furrows. The lower elemental mold blocks 10 and the upper elemental mold blocks are separated after passing the exit of the molding zone to release the molded bellows tube.

In manufacturing a bellows tube by the conventional extrusion molding process, elemental mold blocks need to be combined as shown in Fig. 7 to form mold block trains capable of forming a molding surface of a shape corresponding to that of a desired bellows tube. The elemental mold blocks, i.e., the lower elemental mold blocks 10 and the upper elemental mold blocks 12, are connected in rings.

When a bellows tube of a pattern being manufactured is changed for another bellows tube of another pattern, the arrangement of the elemental mold blocks needs to be changed to compose new mold block trains capable of forming a molding surface conforming to the shape of the latter bellows tube of a new pattern. Composition of the new mold block trains requires troublesome work for removing the elemental mold blocks forming the old mold block trains, and arranging the elemental mold blocks to form the new mold block trains. Since the extruder is stopped for a time necessary to compose the new mold block trains, idle time increases every time the mold block trains are changed. Moreover, the resin remaining in the barrel of the extruder and the extrusion die often deteriorates while the extruder is stopped. Therefore, the deteriorated resin remaining in the barrel of the extruder and the extrusion die needs to be removed before starting the extrusion molding process for forming the new bellows tube after composing the new mold block trains. Such a mode of work not only causes loss of the resin, but also needs much time and is an impediment to the improvement of productivity.

### DISCLOSURE OF THE INVENTION

Accordingly, it is an object of the present invention to solve the foregoing problems in the prior art, and to provide a method of manufacturing a bellows tube, capable of changing old mold block trains for new mold block trains without requiring preparatory work when the quality of the bellows tube is changed, and of efficiently manufacturing bellows tubes of different qualities by optionally changing the arrangement of the elemental mold blocks of the mold block trains according to the patterns of bellows tubes, and an apparatus for carrying out the method.

To achieve the object, the present invention provides a method of manufacturing bellows tubes by an extrusion molding process using a mold formed by a first mold block train composed by arranging a plurality of half elemental mold blocks respectively having half molding surfaces of different shapes corresponding to the shapes of elements of the bellows tube according to the pattern of the bellows tube, and a second mold block train composed by arranging the same half elemental molding blocks as those of the first mold block train in the same arrangement as that in which the half elemental mold blocks of the first mold block train are arranged, said method comprising the steps of: composing the first and the second mold block train by selecting necessary elemental mold blocks and sequentially arranging the selected elemental mold blocks according to a specified composition data on the types, the numbers and order of the elemental mold blocks, and moving the first and the second mold block train toward a molding zone; molding a bellows tube by extruding a molten resin through an extrusion die by an extruder into a space between the first and the second mold block train, moving the first and the second mold block train in the same direction so that the corresponding elemental mold blocks of the first and the second mold block train are clamped to form elemental molds, and evacuating cavities formed in the elemental molds at a negative pressure to mold the bellows tube; and sorting the elemental mold blocks of the first and the second mold block train passed through the molding zone according to type into mold block groups each of elemental mold blocks of the same type.

A bellows tube manufacturing system using a mold formed by a first mold block train composed by arranging a plurality of half elemental mold blocks respectively having molding surfaces of different shapes corresponding to the elemental shapes of the bellows tube according to the pattern of the bellows tube, and a second mold block train composed by arranging the same half elemental mold blocks as those of the first mold block train in the same arrangement as that in which the half elemental mold blocks of the first mold block train are arranged to form a bellows tube by extrusion molding to carry out the method of manufacturing bellows comprises: a molding unit having a molding zone extending between an entrance by which the corresponding elemental mold blocks of the first and the second mold block train being clamped to form elemental molds pass and an exit by which the corresponding elemental mold blocks of the first and the second mold block train being separated to release a molding pass, and capable of producing a negative pressure in cavities formed in the elemental molds; an extruder provided with an extrusion die disposed near the entrance to extrude a molten resin into spaces between the corresponding elemental mold blocks of the first and the second mold block train; a mold block train composing means for composing elemental mold blocks of different types according to a specified composition data to compose the first and the second mold block train; and mold block train moving means for moving the first and the second mold block train of the elemental mold blocks from the mold block train composing means into the molding zone.

The bellows tube manufacturing method and the bellows tube manufacturing system may apply pressure outward to the extruded resin instead of evacuating the interior of the elemental molds at a vacuum.

In the bellows tube manufacturing system according to the present invention, the mold block train composing means includes: mold block storage units for temporarily storing the elemental mold blocks sorted according to type and arranged in rows each of the elemental mold blocks of the same type; mold block sorting means for identifying the elemental mold blocks of the first and the second mold block train returned from the molding zone, sorting the elemental mold blocks according to type, and returning the sorted elemental mold blocks to the mold block storage units; mold block train composing units for selecting necessary elemental mold blocks from the mold block storage unit and composing the first and the second mold block train according to specified composition data; and composition data specifying means for specifying the composition data and giving the specified composition data to the mold block train composing units.

In the bellows tube manufacturing system according to the present invention, the composition data specifying means selects composition data on the shape of the bellows tube from composition data on a plurality of mold block compositions produced beforehand.

In the bellows tube manufacturing system according to the present invention, identification marks are attached to the elemental mold blocks, and the mold block sorting means identifies the elemental mold blocks by the identification marks to sort the elemental mold blocks according to type.

### BRIEF DESCRIPTION OF THE DRAWINGS

Fig 1 is a schematic view of assistance in explaining a bellows tube manufacturing system in a preferred embodiment according to the present invention;
Fig. 2 is a block diagram of a mold block train composing unit included in the bellows tube manufacturing system shown in Fig. 1;
Fig 3 is a diagrammatic view of assistance in explaining composition patterns of mold block trains;
Fig. 4 is a block diagram of a bellows tube manufacturing system in another embodiment according to the present invention;
Fig. 5 is a side elevation of a bellows tube;
Figs. 6(a) to 6(d) are side elevations of shape elements A, B, C and D for forming a bellows tube; and
Fig. 7 is a diagrammatic view of an essential part of a prior art bellows tube manufacturing system.

### BEST MODE FOR CARRYING OUT THE INVENTION

A bellows tube manufacturing method and a bellows tube manufacturing system embodying the present invention will be described with reference to the accompanying drawings.

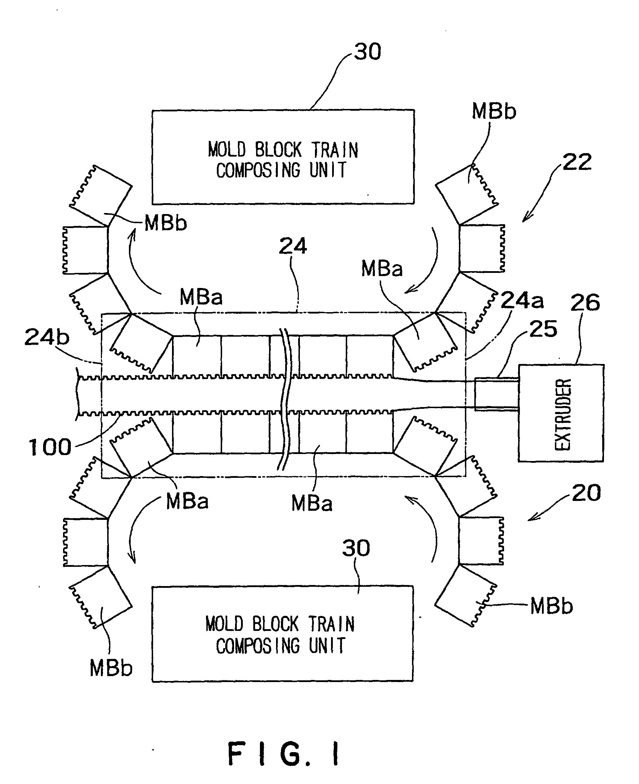

Fig. 1 is a typical view of a molding unit included in a bellows tube manufacturing system in a first embodiment according to the present invention. In Fig. 1, indicated at 20 is a first mold block train and at 22 is a second mold block train.

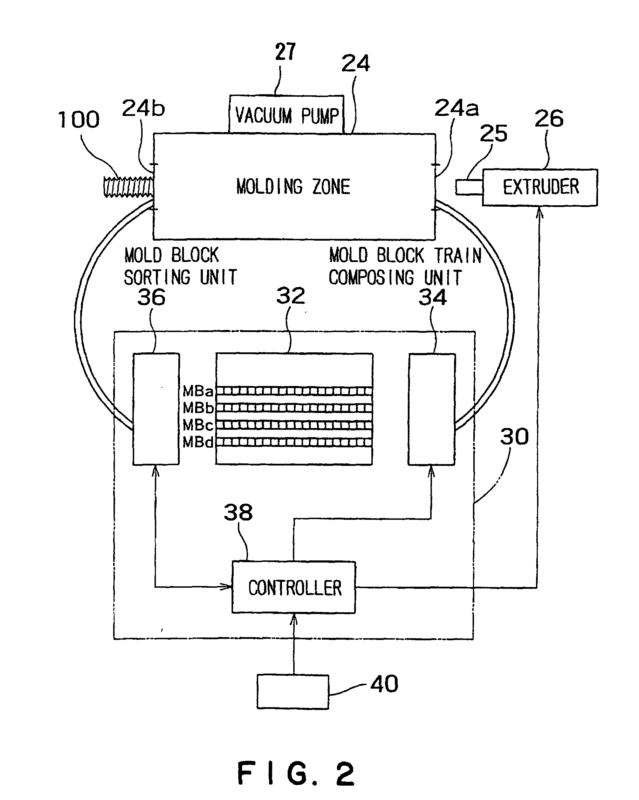

Fig. 2 is a block diagram of a first mold block train composing unit 30 for composing the first mold block train 20. A second mold block train composing unit for composing the second mold block train is the same as the mold block train composing unit 30 and hence the illustration of the second mold block train composing unit in Fig. 2 is omitted.

Each of the first mold block train 20 and the second mold block train 22 is formed by arranging half elemental mold blocks MB capable of forming the shape elements shown in Fig. 6 in a row. The elemental mold blocks capable of forming the shape elements A, B, C and D shown in Figs. 6 (a), 6 (b), 6 (c) and 6 (d) are denoted by MBa, MBb, MBc and MBd, respectively, when necessary.

The elemental mold block MBa of the first mold block train 20, and the elemental mold block MBa of the second mold block train 22 are joined together to form a mold for molding the shape element A having the shape of a bellows. Similarly, the elemental mold block MBb of the first mold block train 20, and the elemental mold block MBb of the second mold block train 22 are joined together to form a mold for molding the shape element B having the shape of a straight tube. Order of arrangement of the elemental mold blocks MB in the first mold block train 20 and that of the elemental mold blocks in the second mold block train 22 are the same.

The first mold block train 20 and the second mold block train 22 are attached to belts or chains, not shown, and are turned at the same speed in the same direction indicated by the arrows. The mating elemental mold blocks MB of the fist mold block train 20 and the second mold block train 22 approaches each other gradually at the entrance 24a of a molding zone 24, and are joined together in the molding zone 24 to form a continuous arrangement of elemental molds. The elemental molds are opened by separating the elemental mold blocks MB as the elemental molds move past the exit 24b of the molding zone 24 to release a bellows tube 100.

An extrusion die 25 is disposed near the entrance 24a of the molding zone 24. An extruder 26 connected to the extrusion die 25 extrudes a molten resin through the extrusion die 25 in a molten resin tube into a space between the first mold block train 20 and the second mold block train 22. A cavity defined by the clamped elemental mold blocks MB is evacuated by a vacuum pump 27 to attract the molten resin tube to the molding surfaces of the elemental mold blocks MB and, consequently, the molten resin tube comes into close contact with the molding surfaces of the clamped elemental mold blocks MB.

The mold block train composing units 30 shown in Fig. 1 composes the first mold block train 20 and the second mold block train by arranging the elemental mold blocks MB of the suitable types selected according to the quality of a bellows tube to be manufactured.

Referring to Fig. 2, the mold block train composing units 30 arranges the elemental mold blocks MB of different types according to a specified composition pattern of a bellows tube to be manufactured to compose the first mold block train 20 and the second mold block train 22.

Referring to Fig. 2, the mold block train composing unit 30 includes a mold block storage unit 32 for temporarily storing the elemental mold blocks MB sorted into elemental mold block groups according to type and arranged in rows each of the elemental mold blocks MB of the same type, a mold block train composing unit 34 for selecting necessary elemental mold blocks MB from the mold block storage unit 32 and composing a first mold block train 20 according to a specified composition pattern, a mold block sorting unit for identifying the elemental mold blocks MB of the first mold block train 20 returned from the molding zone 24, sorting the elemental mold blocks MB according to type, and returning the sorted elemental mold blocks MB to the mold block storage unit 32, and a controller 38.

The steps of a bellows tube manufacturing method will be described in connection with the functions of the components of the mold block train composing unit 30.

The mold block storage unit 32 stores four types of elemental mold blocks MBa, MBb, MBc and MBd respectively corresponding to the shape elements A, B, C and D shown in Fig. 6 for composing the first mold block train 20. The elemental mold blocks MBa, MBb, MBc and MBd are sorted into elemental mold block groups according to type and are arranged in separate rows of the elemental mold blocks MBa, MBb, MBc and MBd.

The mold block train composing unit 34 has a composing device connected to the controller 38. The controller 38 gives a mold block train composing instruction to the mold block train composing unit 34. The mold block train composing instruction specifies the numbers of the types of elemental mold blocks MB and order of arrangement of the elemental mold blocks MB.

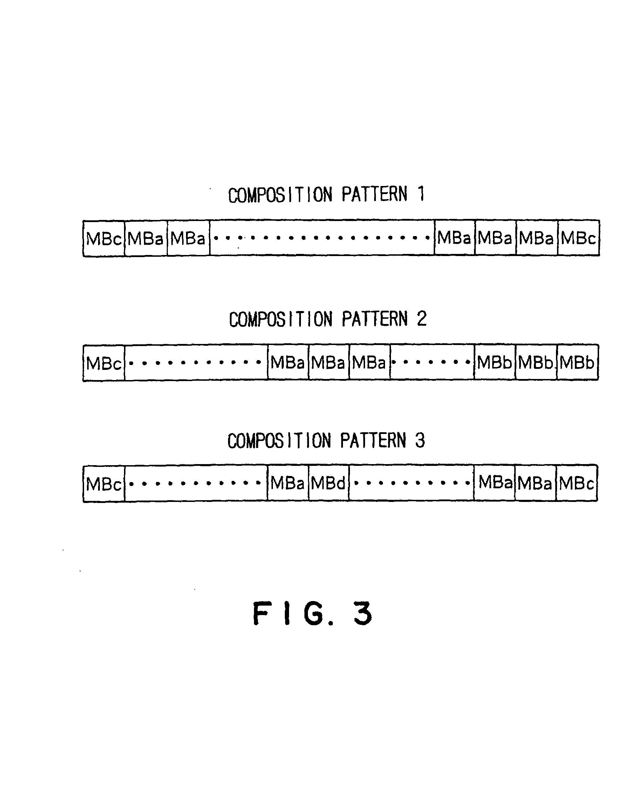

Composition patterns in examples will be described with reference to Fig. 3.

A composition pattern 1 represents a bellows tube having a pleated tubular body, and straight tubular parts continuous with the opposite ends of the pleated tubular body. The composition pattern 1 specifies a mold block train having the elemental mold block MBc for forming the head straight tubular part, a predetermined number of the elemental mold blocks MBa successively arranged behind the elemental mold block MBc for forming a desired length of the pleated tubular body, and the elemental mold block MBc for forming the tail straight tubular part.

A composition pattern 2 represents a bellows tube having a length of straight tubular part, a pleated tubular body continuous with the straight tubular part, and a straight tubular part continuous with the pleated tubular body. The composition pattern 2 specifies a mold block train having a predetermined number of the successively arranged elemental mold blocks MBc for forming a desired length of the head straight tubular part, a predetermined number of the elemental mold blocks MBa for forming a desired length of the pleated tubular body successively arranged behind the elemental mold blocks MBc, and a predetermined number of the successively arranged elemental mold blocks MBc for forming a desired length of the tail straight tubular part.

A composition pattern 3 represents a bellows tube having a length of first straight tubular part, a first pleated tubular body continuous with the straight tubular part, a second straight tubular part continuous with the first pleated tubular body, a second pleated tubular body continuous with the second straight tubular part, and a third straight tubular part continuous with the second pleated tubular body. The composition pattern 3 specifies a mold block train having an elemental mold block MBc for forming a first straight tubular part, a predetermined number of the successively arranged elemental mold blocks MBa for forming a desired length of the first pleated tubular body, a predetermined number of the successively arrange elemental mold blocks MBd for forming the second straight tubular part, a predetermined number of the successively arranged elemental mold blocks MBa for forming a desired length of the second pleated tubular body, and the elemental mold block MBc for forming the third straight tubular part.

The respective numbers and order of arrangement of the elemental mold blocks MBa, MBb, MBc and MBd of the different types are specified to compose a mold block train corresponding to a bellows tube of a desired pattern.

The mold block sorting unit 36 identifies the elemental mold blocks MBa, MBb, MBc and MBd of the mold block train returned from the molding zone 24 after releasing a molding, and sorts the elemental mold blocks MBa, MBb, MBc and MBd according to type, and returns the sorted elemental mold blocks MBa, MBb, MBc and MBd respectively to the separate rows of the elemental mold blocks MBa, MBb, MBc and MBd arranged in the mold block storage unit 32. The elemental mold blocks MBa, MBb, MBc and MBd are provided with identification marks that can be optically or magnetically recognized. An identification sensor identifies the elemental mold blocks MBa, MBb, MBc and MBd by the identification marks to sort the elemental mold blocks MBa, MBb, MBc and MBd, and the sorted elemental mold blocks MBa, MBb, MBc and MBd are returned to the corresponding rows of the elemental mold blocks MBa, MBb, MBc and MBd arranged in the mold block storage unit 32.

The mold block sorting unit 36 may be an industrial robot capable of identifying the elemental mold blocks MBa, MBb, MBc and MBd with an identification sensor, and gripping the elemental mold blocks MBa, MBb, MBc and MBd, and returning the elemental mold blocks MBa, MBb, MBc and MBd to the corresponding rows of the elemental mold blocks MBa, MBb, MBc and MBd arranged in the mold block storage unit 32. Rails provided with turnout points may be extended between the mold block sorting unit 36 and the mold block storage unit 32, the elemental mold blocks MB may be moved along the rails, and switch throwing devices for operating the turnout points may be operated according to the results of mold block identification made by an identification sensor to sort the elemental mold blocks MBa, MBb, MBc and MBd.

The bellows tube manufacturing method will be described with reference to Figs. 1 and 2.

Composition pattern data 40 on a pattern of a bellows tube to be manufactured is given beforehand to the controller 38. Composition pattern data 40 on patterns of a plurality of bellows tube may be stored in a storage device, and the controllers 38 may selectively specify the composition pattern data 40 on a desired bellows tube.

The controllers 38 give a mold block train composing instruction specifying a composition pattern to the mold block train composing units 34. Then, the mold block train composing units 34 select necessary elemental mold blocks MBa, MBb, MBc and MBd sequentially according to the mold block train composing instruction to compose a first mold block train 20 and a second mold block train 22 conforming to the mold block train composing instruction. The controllers 38 drive mold block assembly moving units to move the first mold block train 20 and the second mold block train 22 at the same speed into the molding zone 24.

The mating elemental mold blocks MB of the fist mold block train 20 and the second mold block train 22 approaches each other gradually at the entrance 24a of the molding zone 24, the extruder 25 extrude a molten resin into a space between the corresponding elemental mold blocks of the first mold block train 20 and the second mold block train 22, the vacuum pump 27 evacuates a cavity formed in a continuous arrangement of elemental molds formed by clamping the corresponding elemental mold blocks of the first mold block train 20 and the second mold block train 22 at a negative pressure to make the molten resin come into close contact with a molding surface defining the cavity, and thereby a bellows tube 100 is molded. The elemental molds are opened by separating the elemental mold blocks MB of the first mold block train 20 and the second mold block train 22 as the elemental molds move past the exit 24b of the molding zone 24 to release the bellows tube 100. The bellows tube 100 released from the elemental molds is advanced straight forward.

The first mold block train 20 and the second mold block train 22 reach the mold block sorting units 36. The mold block sorting units 36 sort the elemental mold blocks MBa, MBb, MBc and MBd of the first mold block train 20 and the second mold block train 22 by type, and return the sorted elemental mold blocks MBa, MBb, MBc and MBd respectively to the corresponding rows of the elemental mold blocks MBa, MBb, MBc and MBd arranged in the mold block storage units 32.

Thus, one molding cycle is completed. If it is required to mold another bellows tube of the same pattern as that of the bellows tube 100, the same molding cycle may be repeated using mold block trains of the same composition as that of the first mold block train 20 and the second mold block train 22.

When it is desired to mold a bellows tube of another pattern, the controllers 38 give a new mold block train composing instruction to the mold block train composing units 34. Then, the mold block train composing units 34 compose a first mold block train 20 and a second mold block train 22 of a composition specified by the new mold block train composing instruction, and move the first mold block train 20 and the second mold block train 22 into the molding zone 24.

Thus, the bellows tube manufacturing system does not need to be stopped to change the mold block trains of a composition for those of another composition. Accordingly, the bellows tube manufacturing system is capable of manufacturing bellows tubes of optional patterns continuously at high productivity and of reducing idle time.

Since preparatory operations are unnecessary, and bellows tubes of optional patterns can be continuously manufactured by using the mold block trains of compositions corresponding to the desired patterns of the bellows tubes. Consequently, troubles attributable to the interruption of operation of the bellows tube manufacturing system, such as loss and deterioration of the resin, can be prevented, and the bellows tube manufacturing system operates at high productivity.

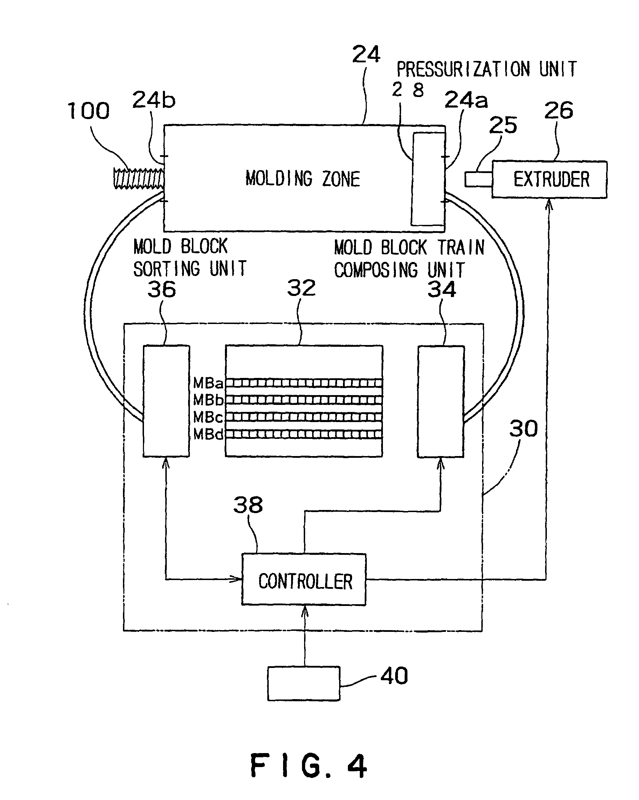

Fig. 4 shows a bellows tube manufacturing system in a second embodiment according to the present invention. The bellows tube manufacturing system in the second embodiment apply pressure in a space defined by a molten resin tube extruded through an extrusion die 25 in a molding zone 24 instead of evacuating cavities in elemental molds in the molding zone 24. A pressurization unit 28 is disposed at the entrance of the molding zone 24 to pressurize a space in a molten resin tube to press the molten resin tube closely against the molding surface defined by the elemental molds formed by clamping elemental mold blocks of mold block trains moving in the molding zone 24 to mold a bellows tube. The mold block trains are composed by the same method as that by which the bellows tube manufacturing system in the first embodiment composes the first and the second mold block train.

As apparent from the foregoing description, according to the present invention, the bellows tube manufacturing system is capable of composing mold block trains of a composition suitable for molding a desired bellows tube without requiring any preparatory operations and without interrupting the molding operation, of composing mold block trains of optional composition, and of continuously manufacturing bellows tubes of different patterns.

## Claims

1. A method of manufacturing bellows tubes by an extrusion molding process using a mold formed by a first mold block train composed by arranging a plurality of half elemental mold blocks respectively having half molding surfaces of different shapes corresponding to the shapes of elements of the bellows tube according to the pattern of the bellows tube, and a second mold block train composed by arranging the same half elemental molding blocks as those of the first mold block train in the same arrangement as that in which the half elemental mold blocks of the first mold block train are arranged, said method comprising the steps of:
composing the first and the second mold block train by selecting necessary elemental mold blocks and sequentially arranging the selected elemental mold blocks according to a specified composition data on the types, the numbers and order of the elemental mold blocks, and moving the first and the second mold block train toward a molding zone;
molding a bellows tube by extruding a molten resin through an extrusion die by an extruder into a space between the first and the second mold block train, moving the first and the second mold block train in the same direction so that the corresponding elemental mold blocks of the first and the second mold block train are clamped to form elemental molds, and evacuating cavities formed in the elemental molds at a negative pressure; and
sorting the elemental mold blocks of the first and the second mold block train passed through the molding zone according to type into mold block groups each of elemental mold blocks of the same type.

2. The method of manufacturing bellows tubes according to claim 1, wherein the step of molding a bellows tube applies pressure in a space defined by a resin tube formed by extruding the molten resin through the extrusion die instead of evacuating the cavities formed by the elemental molds.

3. The method of manufacturing bellows tubes according to claim 1, wherein the step of composing the first and the second mold block train forms the first and the second mold block train according to composition data corresponding to the pattern of the bellows tube and selected from composition data on a plurality of compositions of the first and the second mold block train produced beforehand.

4. The method of manufacturing bellows tubes according to claim 1, wherein the step of sorting the elemental mold blocks according to type identifies the elemental mold blocks by identification marks attached to the elemental mold blocks and sorts the elemental mold blocks according to type.

5. A bellows tube manufacturing system using a mold formed by a first mold block train composed by arranging a plurality of half elemental mold blocks respectively having molding surfaces of different shapes corresponding to the elemental shapes of the bellows tube according to the pattern of the bellows tube, and a second mold block train composed by arranging the same half elemental mold blocks as those of the first mold block train in the same arrangement as that in which the half elemental mold blocks of the first mold block train are arranged to form a bellows tube by extrusion molding, said bellows tube manufacturing system comprising:
a molding unit having a molding zone extending between an entrance by which the corresponding elemental mold blocks of the first and the second mold block train being clamped to form elemental molds pass and an exit by which the corresponding elemental mold blocks of the first and the second mold block train being separated to release a molding pass, and capable of producing a negative pressure in cavities formed in the elemental molds;
an extruder provided with an extrusion die disposed near the entrance to extrude a molten resin into spaces between the corresponding elemental mold blocks of the first and the second mold block train;
a mold block train composing means for composing elemental mold blocks of different types according to a specified composition data to compose the first and the second mold block train; and
mold block train moving means for moving the first and the second mold block train of the elemental mold blocks from the mold block train composing means into the molding zone.

6. The bellows tube manufacturing system according to claim 5, wherein the molding unit applies pressure in a space defined by a resin tube formed by extruding the molten resin through the extrusion die instead of evacuating the cavities formed by the elemental molds.

7. The bellows tube manufacturing system according to claim 5, wherein the mold block train composing means includes:
mold block storage units for temporarily storing the elemental mold blocks sorted according to type and arranged in rows each of the elemental mold blocks of the same type;
mold block sorting means for identifying the elemental mold blocks of the first and the second mold block train returned from the molding zone, sorting the elemental mold blocks according to type, and returning the sorted elemental mold blocks to the mold block storage units;
mold block train composing units for selecting necessary elemental mold blocks from the mold block storage unit and composing the first and the second mold block train according to specified composition data; and
composition data specifying means for specifying the composition data and giving the specified composition data to the mold block train composing units.

8. The bellows tube manufacturing system according to claim 7, wherein the composition data specifying means selects composition data on the shape of the bellows tube from composition data on a plurality of mold block compositions produced beforehand.

9. The bellows tube manufacturing system according to claim 7, wherein identification marks are attached to the elemental mold blocks, and the mold block sorting means identifies the elemental mold blocks by the identification marks to sort the elemental mold blocks according to type.
